# EUROPÄISCHE PATENTSCHRIFT

(11) **EP 0 566 819 B1**
(45) Veröffentlichungstag und Bekanntmachung des Hinweises auf die Patenterteilung: **27.03.1996**
(21) Anmeldenummer: 93100131.7
(22) Anmeldetag: 07.01.1993
(51) Int. Cl.: B66F 9/07, B65G 1/04

(54) **Vorrichtung zur Zusammenstellung von Materialkommissionen aus in einer Wabenregalanlage eingelagertem Lagergut**
Device for the preparation of orders of goods stocked in a warehouse having shelves
Dispositif pour préparer des commandes d'articles stockés dans un magasin à rayonnages

(30) Priorität: 24.04.1992 DE 4213565
(43) Veröffentlichungstag der Anmeldung: 27.10.1993
(73) Patentinhaber: KEURO Besitz GmbH & Co. EDV-Dienstleistungs KG, D-77855 Achern-Gamshurst (DE)
(72) Erfinder: Spath, Dieter, Prof. Dr.-Ing., W-7595 Sasbachwalden (DE); Stolzer, Armin, W-7570 Baden-Baden (DE)
(74) Vertreter: Lemcke, Rupert, Dipl.-Ing.

(56) Entgegenhaltungen:
- EP-A- 0 116 152
- EP-A- 0 407 703
- WO-A-83/03086
- DE-A- 3 038 474
- DE-A- 3 211 596
- DE-A- 3 237 346
- FR-A- 2 542 299

## Beschreibung

Die Erfindung betrifft eine Vorrichtung zur Zusammenstellung von Materialkommissionen aus in einer Wabenregalanlage eingelagertem Lagergut in Gestalt eines an einer Stirnseite des jeweiligen Regals entlang verfahrbaren Regalförderzeuges mit einer mitfahrenden Bühne, die eine Arbeitsplattform sowie einen Stellplatz zur Handhabung des Lagergutes aufweist, auf den die das Lagergut enthaltenden Kassetten wenigstens mittelbar durch ein Transportmittel überbringbar sind, das die Kassetten ergreift und aus dem Regal herauszieht sowie wieder in das Regal zurückschiebt, wobei neben dem Stellplatz eine Ablageeinrichtung zur Aufnahme ausgewählter Stücke des Lagergutes angeordnet ist.

Bei derartigen bekannten Vorrichtungen verfährt die Bühne des Regalförderzeuges jeweils an die Stelle, wo aus dem Wabenregal eine das Lagergut enthaltende Kassette entnommen werden soll. Die Bühne wird also sowohl horizontal als auch vertikal über den gesamten Querschnitt der Wabenlagerregale verfahren.

Ist die gewünschte Kassette angesteuert, so wird sie durch geeignete Transportmittel auf den Stellplatz der Bühne aus dem Regal herausgezogen. Die Bedienungsperson kann dann das gewünschte Lagergut auf die neben dem Stellplatz angeordnete Ablageeinrichtung bringen. Danach wird die Kassette durch die Transportmittel wieder in ihr Fach zurückgeschoben.

Nunmehr kann das entnommene Lagergut gebündelt und durch entsprechende Fahrbewegung des Regalförderzeuges an einen Auslagerplatz gebracht werden. Oder aber es wird ein weiterer Kassettenplatz angefahren, um auf die geschilderte Weise anderes Lagergut dem erst entnommenen Lagergut hinzuzufügen.

Diese bekannte Vorrichtung hat zunächst den Nachteil einer sehr zeitaufwendigen Arbeitsweise, weil immer nur eine Kassette bzw. das darin enthaltene Lagergut bearbeitet werden kann. Außerdem entstehen große Totzeiten dadurch, daß das aus den Kassetten entnommene, ausgewählte Lagergut zu einem Auslagerplatz gebracht werden muß.

Darüber hinaus führt das ständige Mitfahren der Bühne sowohl in horizontaler als auch in vertikaler Richtung nicht nur zu einem großen Energieaufwand sondern auch zu Unfallgefahren für die Bedienungsperson, so daß die Bühne mit entsprechend aufwendigen Unfallschutzeinrichtungen versehen werden muß. Dazu gehört auch, daß sich bezüglich der oberen Position der Bühne ein Raumverlust in Form einer Mannhöhe ergibt, indem die Bühne nicht entsprechend hoch unter die obere Abgrenzung der insgesamten Lagereinrichtung gefahren werden kann.

Aufgabe der Erfindung ist es, eine Vorrichtung der eingangs genannten Art dahingehend zu verbessern, daß ein wesentlich schnellerer Arbeitszyklus für die Zusammenstellung von Materialkommissionen erreichbar ist und zum anderen der durch die Bühnenbewegung entstehende Energieaufwand verringert wird in Verbindung damit, daß auch eine Herabsetzung der Unfallgefahr für die Bedienungsperson stattfindet. Dabei soll der durch die Bühne bedingte Platzverlust verringert werden unter gleichzeitiger Verbesserung für die Arbeitsbedingungen des Bedienungspersonals.

Ausgehend von einer Vorrichtung der eingangs genannten Art ist diese Aufgabe erfindungsgemäß dadurch gelöst, daß die Bühne am Regalförderzeug feststehend angebracht ist, daß das Regalförderzeug zur Aufnahme einer Kassette eine vertikal verfahrbare Hubvorrichtung mit dem Transportmittel für die Kassetten aufweist, daß zwischen Hubvorrichtung und Stellplatz der Bühne am Regalförderzeug eine Wechselvorrichtung für die Kassetten im wesentlichen vertikal verfahrbar ist, und daß Hubvorrichtung, Wechselvorrichtung, Stellplatz der Bühne und Ablageeinrichtung mit Mitteln zum Transport der Kassetten bzw. des Lagergutes quer zur Längsrichtung der Kassetten bzw. quer zur Bewegungsrichtung der Kassetten zwischen Wabenregal und Regalförderzeug ausgestattet sind derart, daß die Kassetten zwischen Hubvorrichtung, Wechselvorrichtung und Stellplatz gegenseitig übergeben werden können.

Dabei kann vorgesehen sein, daß die Wechselvorrichtung mit zwei nahe übereinander angeordneten Aufnahmeplätzen versehen ist, die mit den Mitteln zum Transport der Kassetten bzw. des Lagergutes quer zur Längsrichtung der Kassetten bzw. quer zur Bewegungsrichtung der Kassetten ausgestattet sind.

Durch diese erfindungsgemäßen Maßnahmen ist zunächst einmal erreicht, daß die Bühne nur noch in einer, vorzugsweise möglichst weit unten liegenden Ebene horizontal verfährt. Damit entfallen Hubbewegungen für die Bühne und der damit verbundene Energieaufwand. Außerdem können die Unfallschutzmaßnahmen für die Bedienungsperson einfacher gestaltet werden.

Zum anderen ergibt sich ein sehr schnelles Zeitverhalten für den Kassettenwechsel und damit eine wesentlich erhöhte Kommissionierleistung. Denn nunmehr kann eine Kassette über die Hubvorrichtung aus dem Wabenregal entnommen und auf einen Aufnahmeplatz der Wechselvorrichtung übergeben werden. Die Wechselvorrichtung bringt dann die Kassette zum Stellplatz der Bühne. Währenddessen kann jedoch die Hubvorrichtung bereits durch entsprechendes Verfahren des Regalförderzeuges eine zweite Kassette aus dem Wabenregal holen.

Vom Stellplatz der Bühne entnimmt nun die Bedienungsperson aus der ersten Kassette das gewünschte Material und überbringt es auf die Ablageeinrichtung. Derweilen kann die Wechselvorrichtung die zweite Kassette von der Hubvorrichtung übernehmen. Nunmehr fährt die Wechselvorrichtung mit ihrem freien Aufnahmeplatz zur Bühne und übernimmt dort die erste Kassette zurück. Danach verfährt die Wechselvorrichtung soweit, daß die zweite Kassette auf den Stellplatz gegeben werden kann. Währenddessen kann nun aber die Hubvorrichtung die erste Kassette von der Wechselvorrichtung zurücknehmen und durch entsprechendes Verfahren des Regalförderzeugs an einen freien Lagerplatz innerhalb des Wabenregals bringen.

Wie aus dem zuletzt Gesagten ersichtlich, verbindet sich mit der erfindungsgemäßen Vorrichtung auch die Möglichkeit der sogenannten chaotischen Lagerung. Das bedeutet, daß eine zurückzulagernde Kassette auf möglichst kurzem Fahrweg des Regalförderzeugs zu einem freien Lagerplatz zurückgebracht wird, der nicht unbedingt ihr ursprünglicher Lagerplatz sein muß. Auf diese Weise lassen sich in an sich bekannter Art die Fahrwege des Regalförderzeugs auf ein Minimum reduzieren, wobei es bei der Auswahl des freien Platzes für eine rückzulagernde Kassette selbstverständlich auch berücksichtigt werden kann, welche Kassette als nächstes aus dem Wabenregal entnommen werden soll.

Die vorstehend kurz zusammengefaßt geschilderte neue Arbeitsweise wird nachfolgend im einzelnen anhand der Zeichnung näher erläutert, weshalb wegen weiterer Einzelheiten auf die dortige Beschreibung verwiesen wird.

Als zweckmäßig hat es sich erwiesen, daß das Regalförderzeug ein bodenverfahrbarer Rahmen ist, entlang dessen vertikalen, von den Stirnseiten der Wabenregale verfahrbaren Schenkel die Hubvorrichtung senkrecht bewegbar ist, und daß der gegenseitige Abstand der Schenkel größer als die Länge der Kassetten in Arbeitsrichtung der Transportmittel ist. Dabei kann auch vorgesehen sein, daß die Wechselvorrichtung an den vertikalen Schenkeln des Rahmens senkrecht bewegbar ist.

Ferner ist es vorteilhaft, daß die Hubvorrichtung Auflagebahnen für die Kassetten bei deren Bewegung aus dem Wabenregal und in dieses zurück aufweist und daß Quertransportmittel und Auflagebahnen gegenseitig höhenverstellbar sind. Dabei kann vorgesehen sein, daß die Hubvorrichtung über die gesamte Höhe des Rahmens verfahrbar ist.

Hier ist also vorgesehen, die Quertransportmittel versenkbar auszuführen, damit beim Ausziehen und Einschieben der Kassetten gegenüber dem Wabenregal diese Quertransportmittel nicht im Wege stehen. Ist dann eine Kassette auf die Hubvorrichtung gebracht und soll in Richtung auf die Wechselvorrichtung bewegt werden, so können die Quertransportmittel der Hubvorrichtung nach oben ausgefahren werden und dabei die Kassette von den Auflagebahnen abheben.

Das Transportmittel der Hubvorrichtung für die Kassetten kann ein in Kassettenlängsrichtung an der Hubvorrichtung über die Kassetten hinweg verfahrbarer Greifer zur Erfassung des dem Regalförderzeug jeweils zugewandten Stirnseitenbereiches der Kassetten sein. Ein solcher Greifer, der beispielsweise durch eine vertikal verschwenkbare Klinke dargestellt sein kann, kann die jeweilige Stirnseite der Kassette erfassen, um sie aus dem Wabenregal zu ziehen. Dann kann die Verbindung zwischen Greifer und Kassette gelöst werden, um die Kassette auf die Wechselvorrichtung zu überbringen. Kommt eine Kassette im umgekehrten Falle auf die Hubvorrichtung zurück, so kann dann der Greifer wieder in Verbindung mit der Stirnseite der Kassette gebracht werden, um sie in das jeweilige Fach des Wabenregals zurückzuschieben.

Zweckmäßig ist es ferner, daß die Ablageeinrichtung zur Aufnahme ausgewählter Stücke des Lagergutes einen muldenförmigen Querschnitt aufweist, wobei ein U-förmiger Querschnitt vorgesehen sein kann, ebensogut jedoch auch ein V-förmiger Querschnitt.

Ferner ist es zweckmäßig, daß die Ablageeinrichtung eine auf der dem Stellplatz für die Kassetten abgewandten Seite sich nach oben gegebenenfalls geneigt erstreckende, feststehende Auflage in Verbindung mit einer gegenüberliegenden gegebenenfalls schräg nach oben geneigten Gegenauflage ist. Dabei kann die Gegenauflage vom in der Ablageeinrichtung aufgenommenen Lagermaterial fort nach unten aus dem Arbeitsbereich der Quertransportmittel des Stellplatzes bringbar sein.

Auf diese Weise besteht die Möglichkeit, fertige und gebündelte Kommissionen durch Wegklappen der Gegenauflage auf die Quertransportmittel des Stellplatzes zu bringen, von wo aus sie in der nachfolgend geschilderten Weise mit Hilfe der Wechselvorrichtung fortgebracht werden können.

Dazu ist erfindungsgemäß vorgesehen, daß oberhalb oder unterhalb der Bühne eine horizontale Förderbahn für die Materialkommission angeordnet ist, deren Förderrichtung mit der Förderrichtung der Quertransportmittel übereinstimmt, und daß die Förderbahn auf ihrer der Wechselvorrichtung zugewandten Seite bis unmittelbar an die ihr zugewandte Begrenzung der Aufnahmeplätze der Wechselvorrichtung reicht.

Hiermit ist es also möglich, die fertigen Kommissionen vom Stellplatz mit Hilfe der Querfördermittel auf einen der Aufnahmeplätze der Wechselvorrichtung zu bringen. Mit Hilfe der Wechselvorrichtung wird nun die Kommission in die Höhe der Förderbahn gebracht, um dann mit Hilfe der Querfördermittel der Wechselvorrichtung und mit Hilfe der Fördermittel der Förderbahn auf die Förderbahn zu gelangen.

Diese erfindungsgemäße Ausbildung hat den Vorteil, daß im Laufe des Arbeitsprozesses auf der Förderbahn nacheinander in zeitsparender Weise mehrere Kommissionen gesammelt werden können, um diese dann gemeinsam nach außerhalb der Wabenregalanlage zu bringen und fortzuschaffen. Es muß also nicht für jede fertiggestellte Kommission ein gesonderter Fahrvorgang des Regalförderzeuges stattfinden, um diese Kommission auszubringen.

Für diese Auslieferung fertiger Kommissionen ist es schließlich vorteilhaft, daß außerhalb der Wabenregalanlage ein horizontaler Ablagetisch mit in Richtung der Querfördermittel arbeitenden Fördermitteln angeordnet ist, und daß die Höhenlage des Ablagetisches der der Förderbahn entspricht. Auf diese Weise ist es möglich, die mehreren Kommissionen auf den Ablagetisch zu entsorgen. Von dort können Sie dann durch geeignete weitere Mittel entnommen werden, während das Regalförderzeug wieder für weitere Kommissionieraufgaben frei ist.

Die Erfindung betrifft schließlich auch ein Verfahren zur Zusammenstellung von Materialkommissionen aus in einer Wabenregalanlage eingelagertem Lagergut in Gestalt eines an einer Stirnseite des jeweiligen Regals entlang verfahrbaren Regalförderzeuges mit einer mitfahrenden Bühne, die eine Arbeitsplattform sowie einen Stellplatz zur Handhabung des Lagergutes aufweist, auf den die das Lagergut enthaltenden Kassetten wenigstens mittelbar durch ein Transportmittel überbringbar sind, das die Kassetten ergreift und aus dem Regal herauszieht sowie wieder in das Regal zurückschiebt, wobei neben dem Stellplatz eine Ablageeinrichtung zur Aufnahme ausgewählter Stücke des Lagergutes angeordnet ist. Hier besteht die erfindungsgemäße Maßnahme darin, daß die einzulagernden Kassetten in das durch die nächstfolgend auszulagernde Kassette freigewordene Regalfach gebracht werden. Mit dieser Maßnahme, die bereits weiter vorstehend diskutiert worden ist, besteht die Möglichkeit, in zeitsparender Weise Kassetten, die vorher in Behandlung waren, so zurückzulagern, daß dazu nur ein minimaler Fahrweg des Regalförderzeuges erforderlich ist.

Weitere Merkmale und Einzelheiten der Erfindung ergeben sich aus der nachfolgenden Beschreibung einer Ausführungsform, die auf der Zeichnung vereinfacht dargestellt ist. In der Zeichnung zeigen:
- Figur 1: die Stirnansicht einer Wabenregalanlage;
- Figur 2: die Draufsicht auf die Anlage gemäß Figur 1;
- Figur 3: eine Schnittansicht gemäß der Schnittlinie III-III in Figur 1;
- Figur 4: einen vergrößerten Ausschnitt aus Figur 3 und
- Figuren 5 bis 17: einen Ausschnitt des Regalförderzeugs gemäß Figur 3 mit Erläuterung der Arbeitsweise der erfindungsgemäßen Vorrichtung.

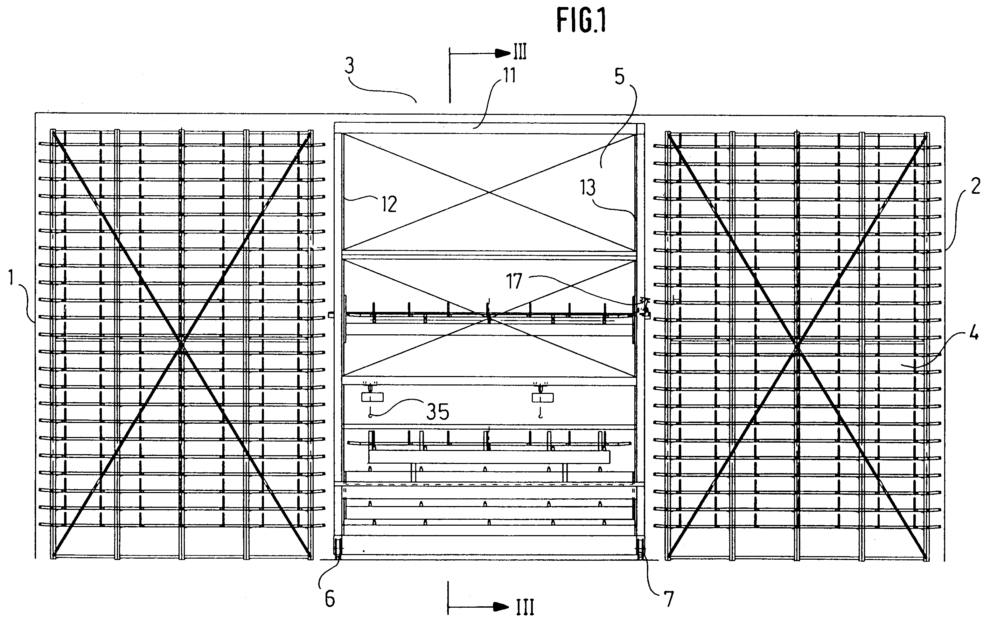

Figuren 1 bis 4 zeigen Wabenregale 1, 2, die zwischen sich einen Regalgang 3 bilden. In den Wabenregalen 1, 2 sind Kassetten 4 dicht übereinander und nebeneinander in durch die Wabenregale gebildeten Fächern eingelagert.

Im Regalgang 3 ist ein Regalförderzeug 5 mittels Schienen 6, 7 bodenverfahrbar entlang den dem Regalgang zugewandten Stirnseiten der Wabenregale 1, 2. Das Regalförderzeug weist dazu ein Fahrgestell 8 mit Rädern 9, 10 auf.

Auf dem Fahrgestell 8 aufgebaut ist einerseits ein Rahmen 11 mit vertikalen Schenkeln 12, 13. Die Schenkel 12, 13 bewegen sich unmittelbar vor den Stirnseiten der in den Wabenregalen 1, 2 eingelagerten Kassetten 4. Die Schenkel 12, 13 haben einen gegenseitigen Abstand derart, daß zwischen ihnen eine Kassette hindurchbewegt werden kann.

Andererseits ist auf dem Fahrgestell 8 eine Bühne 14 aufgebaut, die fest mit dem Fahrgestell bzw. dem Regalförderzeug verbunden ist, also nur in horizontaler Richtung mit dem Regalförderzeug verfährt.

Am Rahmen 11 bzw. dessen Schenkeln 12, 13 ist auf der der Bühne 14 abgewandten Seite eine Hubvorrichtung 15 vertikal verfahrbar, die geeignet ist, eine der Kassetten 4 aufzunehmen. Hierzu weist die Hubvorrichtung Transportmittel 16 auf, die im vorliegenden Fall die Gestalt einer Klinke 17 haben. Diese Transportmittel sind an der Hubvorrichtung quer über den Regalgang 3 beispielsweise durch eine umlaufende Kette verfahrbar. Wenn nun die Klinke 17 die Stirnseite einer der Kassetten 4 erfaßt, kann auf diese Weise die Kassette aus dem jeweiligen Wabenregal auf die Hubvorrichtung 15 gebracht werden, wobei sie dort über nicht im einzelnen dargestellte Führungsbahnen gleitet. Es versteht sich von selbst, daß die Transportmittel 16 an der Hubvorrichtung außerhalb des Querschnittsbereiches angeordnet sind, der durch eine Kassette eingenommen wird.

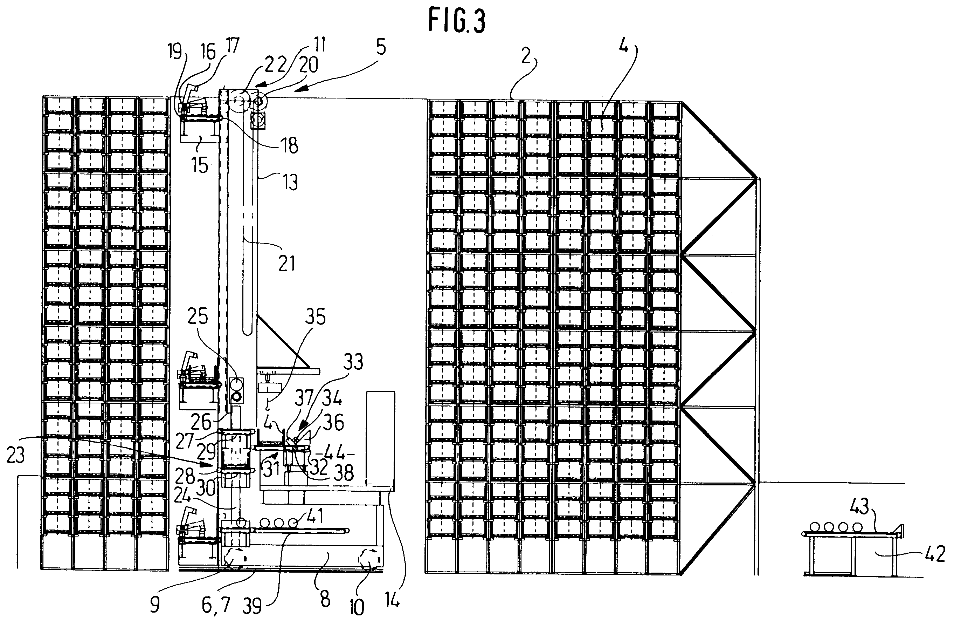

Die Hubvorrichtung 15 ist über die gesamte Höhe des Rahmens 11 verfahrbar, was in Figur 3 durch die drei dort eingezeichneten Positionen dargestellt ist. Die drei eingezeichneten Positionen bedeuten also nicht das Vorhandensein mehrerer Hubvorrichtungen.

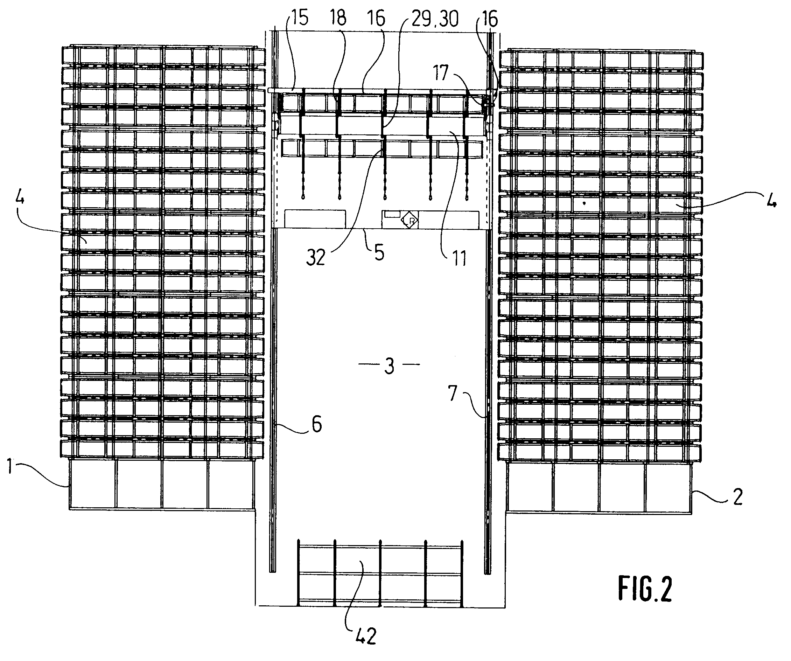

Die Hubvorrichtung ist außerdem mit Quertransportmitteln 18 in Form von Kettenförderern ausgerüstet, durch die die Kassetten in Richtung auf den Rahmen 11 verschoben werden können. Damit diese Quertransportmittel nicht im Wege sind, wenn die Kassetten auf die Hubvorrichtung gezogen bzw. von der Hubvorrichtung aus wieder in ein Wabenregal geschoben werden, sind die Quertransportmittel gegenüber dieser Verschiebebewegung versenkbar, wozu sie bei 19 schwenkbar angelenkt sind. Wie aus Figur 2 ersichtlich, sind diese Quertransportmittel 18 natürlich mehrfach über die Länge der Hubvorrichtung verteilt.

Die Höhenverfahrbarkeit der Hubvorrichtung geschieht durch eine allgemein dargestellte Antriebseinheit 20, von der aus ein Seil- oder Kettentrieb 21 über ein Umlenkrad 22 an der Hubvorrichtung 15 angreift.

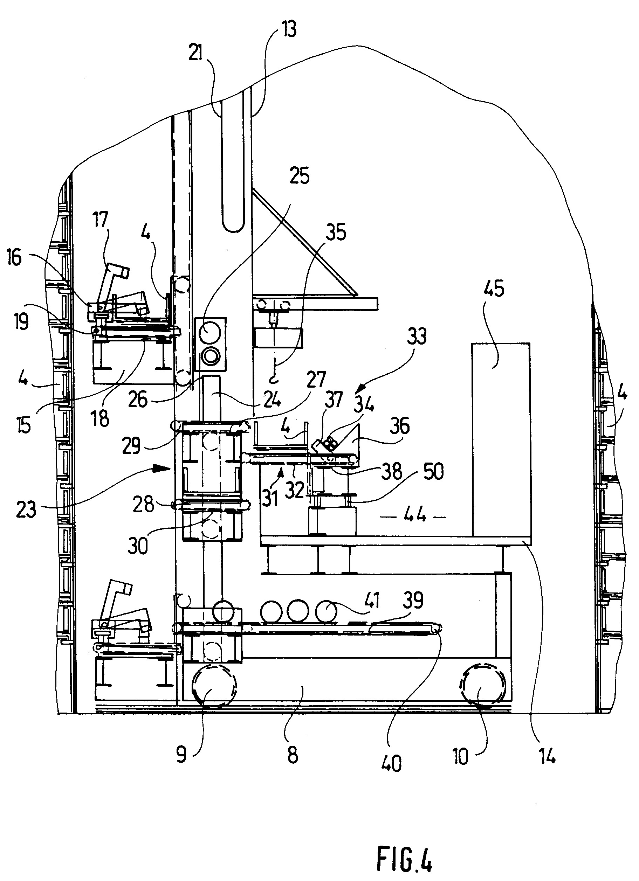

Neben der Hubvorrichtung - bezogen auf Figur 3 bzw. Figur 4 rechts - ist an den Schenkeln 12, 13 des Rahmens 11 eine Wechselvorrichtung 23 entlang Führungen 24 vertikal verfahrbar, wobei der Antrieb über eine Einheit 25 erfolgt, die mit einem Seil oder einer Kette 26 an der Wechselvorrichtung angreift.

Die Wechselvorrichtung hat zwei übereinander angeordnete Aufnahmeplätze 27, 28 für die Kassetten. Diese Aufnahmeplätze sind ebenfalls mit Querfördermitteln 29, 30 in Form von Kettenförderern versehen, die, wie aus Figur 2 ersichtlich, ebenfalls über die Länge der Kassetten bzw. quer zum Regalgang mehrfach angeordnet sind.

Auf der Bühne 14 ist ein Stellplatz 31 angeordnet, der ebenfalls mit Querfördermitteln 32 in Form von Kettenförderern versehen ist. Auf diesen Stellplatz können die Kassetten 4 vermittels der Wechselvorrichtung 23 überbracht werden.

Neben dem Stellplatz 31 befindet sich eine Ablageeinrichtung 33, auf die Lagermaterial 34 durch eine Bedienungsperson aus einer auf dem Stellplatz 31 befindlichen Kassette 4 überbracht werden kann, wozu Kranmittel 35 zur Verfügung stehen.

Die Ablageeinrichtung enthält eine vom Stellplatz 31 fort nach schräg oben geneigte, feststehende Auflage 36 in Verbindung mit einer entgegengesetzt nach schräg oben geneigten Gegenauflage 37 derart, daß die Ablageeinrichtung einen im wesentlichen nach oben offenen, V-förmigen Einschnitt für die Aufnahme des Lagergutes 34 bildet. Dabei ist die Gegenauflage 37 um eine Achse 38 nach unten aus dem Arbeitsbereich der Querfördermittel 32 schwenkbar.

Die Ablageeinrichtung ist hier gegenüber der Bühne 14 über Wägezellen 50 abgestützt, die dazu dienen, das Gewicht des Lagermaterials 34 zu ermitteln, um damit gegebenenfalls eine Aussage über die gewünschte Menge des Lagermaterials zu machen.

Unterhalb der Bühne 14 ist eine horizontale Förderbahn 39 angeordnet, deren der Wechselvorrichtung 23 zugeordnetes Ende bis an die Querfördermittel 30 des Aufnahmeplatzes 28 der Wechselvorrichtung reicht. Die Förderbahn 39 weist Fördermittel 40 auf, deren Förderrichtung mit der Förderrichtung der Quertransportmittel 29, 30 der Wechselvorrichtung übereinstimmt. Auf der Förderbahn 39 sind Materialkommissionen 41 dargestellt.

Wie insbesondere aus den Figuren 2 und 3 ersichtlich, befindet sich außerhalb der Wabenregalanlage ein horizontaler Ablagetisch 42 mit in Richtung der Querfördermittel arbeitenden Fördermitteln 43. Die Höhe des Ablagetisches 42 entspricht der Förderbahn 39.

Allgemein sei zu der Darstellung gemäß Figur 3 und 4 noch gesagt, daß dort im Bereich des Regalförderzeuges das Wabenlager nicht dargestellt ist, um das Regalförderzeug besser darstellen zu können. Selbstverständlich befindet sich hinter dem in den Figuren 3 und 4 ersichtlichen Regalförderzeug ebenfalls die Anordnung des Wabenlagers, wie sie rechts und links des Regalförderzeuges dargestellt ist.

Außerdem ist darauf hinzuweisen, daß der Arbeitsplatz 44 einer Bedienungsperson sich zwischen Ablageeinrichtung 33 und einem Schaltschrank 45 befindet, wobei der Schaltschrank gleichzeitig eine Funktion für die Sicherheit der Bedienungsperson hat.

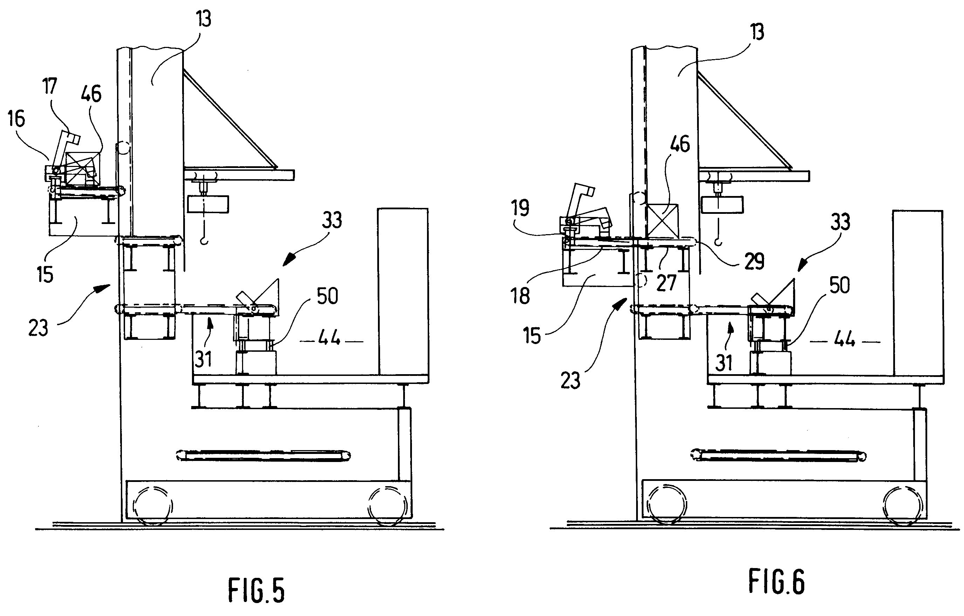

Die anhand der Figuren 1 bis 4 geschildete Vorrichtung zur Zusammenstellung von Materialkommissionen soll hinsichtlich ihrer Funktionsweise nachfolgend anhand der Figuren 5 bis 17 im einzelnen erläutert werden, wobei dort jeweils ein vergrößerter Ausschnitt aus Figur 4 in vereinfachter Form dargestellt ist. Bei der nachfolgenden Diskussion der Figuren 5 bis 17 wird der Einfachheit halber die anhand der Figuren 1 bis 4 eingeführte Bezifferung nur insoweit wiederholt, als sie für das Verständnis der jeweiligen Figur und deren Erläuterung erforderlich ist. Im übrigen ist bei den Figuren 5 bis 10 eine Kassette jeweils vereinfacht durch ein durchkreuztes Rechteck bezeichnet.

Figur 5 zeigt den Zustand, bei dem durch die Hubvorrichtung 15 eine erste Kassette 46 aus einem Wabenregal aufgenommen wurde mit Hilfe der Transportmittel 16, 17, indem die Klinke 17 die Kassette 46 stirnseits ergriffen und auf die Hubvorrichtung 15 gezogen hat.

Nunmehr fährt die Hubvorrichtung 15 gemäß Figur 6 in die Position, die dem oberen Aufnahmeplatz 27 der Wechselvorrichtung 23 entspricht. Durch Betätigung der Querfördermittel 18 der Hubvorrichtung 15 einerseits sowie der Querfördermittel 29 des Aufnahmeplatzes 27 andererseits wird die Kassette 46 von der Hubvorrichtung 15 auf die Wechselvorrichtung 23 übergebracht. Dazu werden die Querfördermittel 18 der Hubvorrichtung 15 um die Schwenklagerung 19 nach oben geschwenkt, um die Kassette von den Führungsbahnen der Hubvorrichtung 15 frei zu machen.

Die erste Kassette 46 befindet sich nun also auf dem oberen Aufnahmeplatz der Wechselvorrichtung 23.

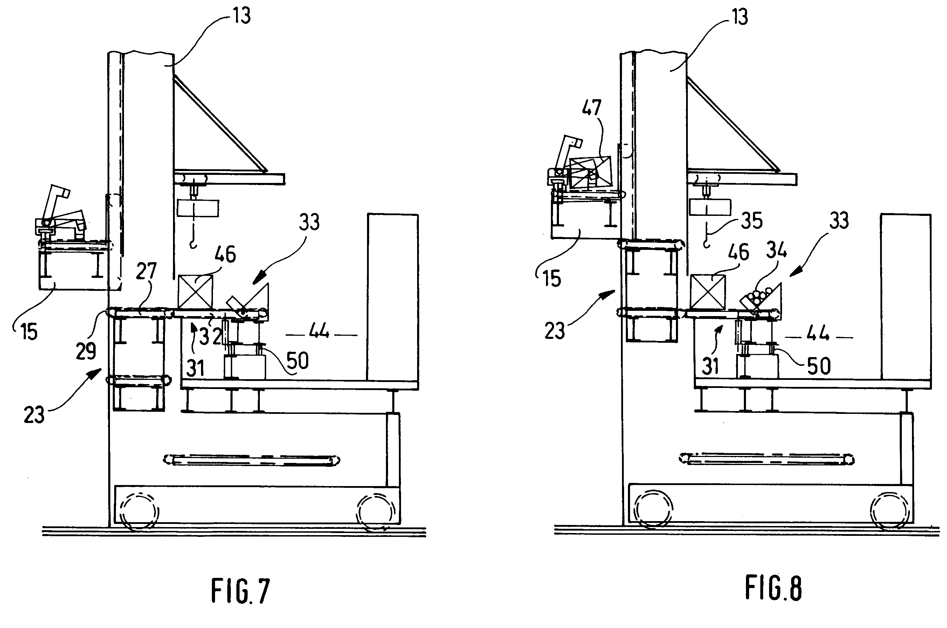

Anschließend fährt gemäß Figur 7 die Wechselvorrichtung 23 nach unten soweit, daß ihr Aufnahmeplatz 27 sich in Höhe des Stellplatzes 31 befindet, so daß durch die Querfördermittel 29, 32 eine Überführung der Kassette 46 auf den Stellplatz 31 erfolgen kann.

Hier kann nun gemäß Figur 8 durch die am Platz 44 befindliche Bedienungsperson Lagermaterial 34 mit Hilfe der Kranmittel 35 aus der Kassette 46 auf die Ablageeinrichtung 33 gebracht werden.

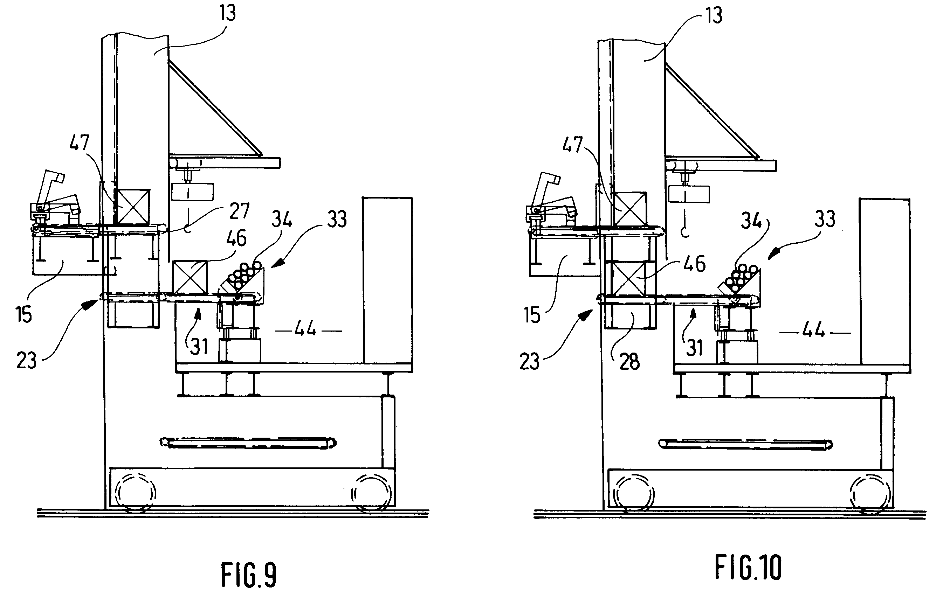

Währenddessen holt die Hubvorrichtung 15, wie aus Figur 8 und 9 ersichtlich, eine zweite Kassette 47 aus dem Wabenregal und übergibt diese auf den wieder nach oben gefahrenen Aufnahmeplatz 27 der Wechselvorrichtung 23.

Wie aus Figur 10 ersichtlich, wird dann die bearbeitete Kassette 46 vom Stellplatz 31 durch die nicht mehr im einzelnen gezeichneten Querfördermittel auf den unteren Aufnahmeplatz 28 der Wechselvorrichtung 23 zurückgegeben.

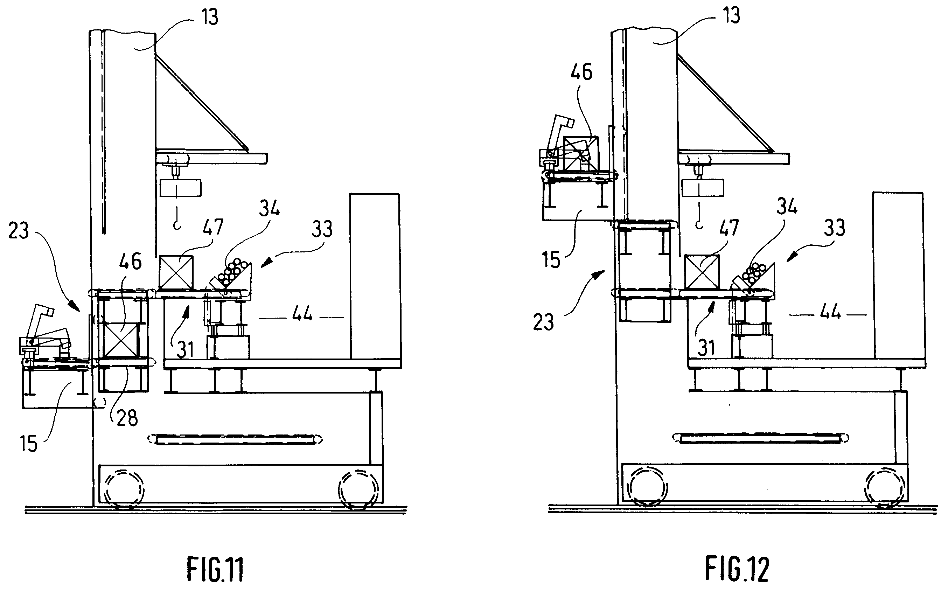

Danach wird gemäß Figur 11 die Wechselvorrichtung abgesenkt, so daß die zweite Kassette 47 auf den Stellplatz 31 übergeben werden kann, während die Hubvorrichtung 15 nach Einnahme der entsprechenden Höhenposition die erste Kassette 46 von dem unteren Aufnahmeplatz 28 der Wechselvorrichtung 23 übernehmen kann.

Nunmehr kann aus der zweiten Kassette 47, die sich auf dem Stellplatz 31 befindet, weiteres Material oder neues Material auf die Ablageeinrichtung 33 überbracht werden, wie dies aus Figur 12 ersichtlich ist. Gleichzeitig fährt die Hubvorrichtung 15 die erste Kassette 46 bei entsprechender Bewegung des Regalförderzeuges 5 zurück auf einen Rücklagerplatz. Dieser Rücklagerplatz kann irgendein freier Platz im Rahmen der Wabenregale sein, wobei die Auswahl zweckmäßig so erfolgt, daß man einen solchen freien Platz wählt, der nahe der nächsten - dritten - herauszuholenden Kassette liegt. Diese dritte Kassette wird dann durch die Hubvorrichtung herbeigebracht und es spielt sich der beschriebene Zyklus erneut ab.

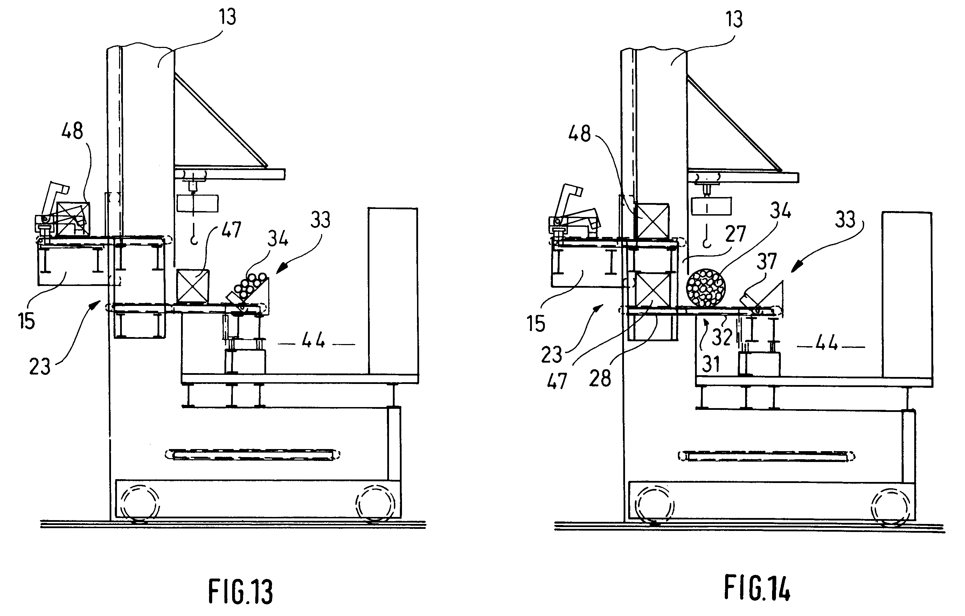

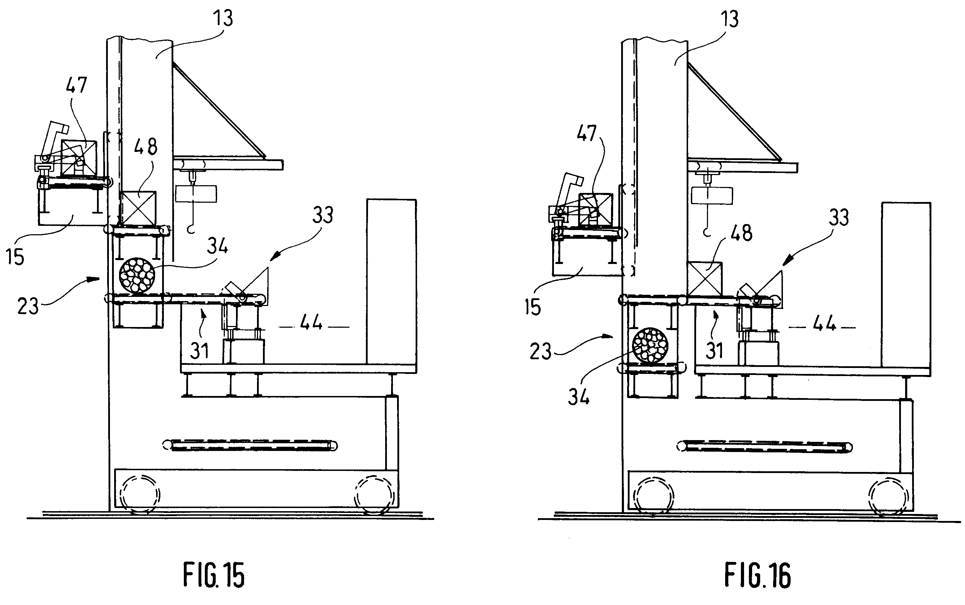

Figur 13 zeigt den Zustand, wo durch die Hubvorrichtung 15 eine dritte Kassette 48 geholt worden ist. Diese wird nun gemäß Figur 14 auf den oberen Aufnahmeplatz 27 der Wechselvorrichtung 23 übergeben, während gleichzeitig die zweite Kassette 47 auf den unteren Aufnahmeplatz 28 der Wechselvorrichtung übergeben wird. Während die Wechselvorrichtung stehen bleibt, übernimmt die Hubvorrichtung 15 bei entsprechender Verfahrung die Kassette 47 von dem unteren Aufnahmeplatz 28 der Wechselvorrichtung, wie dies auch aus Figur 15 bereits ersichtlich ist.

Damit wird der untere Aufnahmeplatz 28 der Wechselvorrichtung frei.

Nunmehr kann das in der Ablageeinrichtung 33 enthaltene Material 34 gebündelt und durch Absenken der Gegenauflage 37 auf die Fördermittel 32 entlassen werden, über die es dann in den frei gewordenen Aufnahmeplatz 28 der Wechselvorrichtung 23 gebracht werden kann. Dieser Zustand ist in Figur 15 dargestellt.

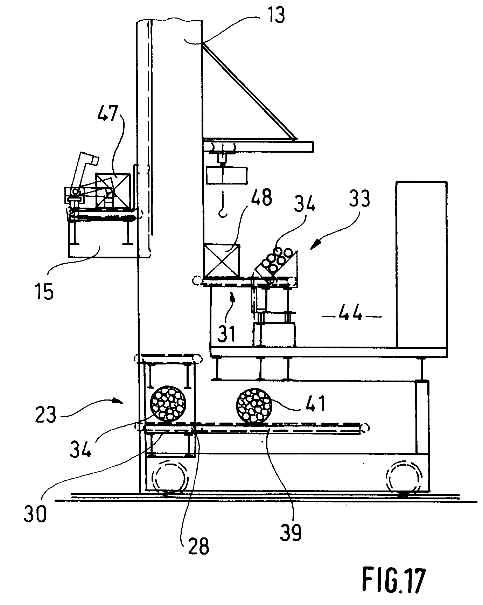

Nunmehr findet durch Absenken der Wechselvorrichtung 23 gemäß Figur 16 zunächst eine Übergabe der dritten Kassette 48 auf den Stellplatz 31 statt. Durch weiteres Absenken der Wechselvorrichtung 23 kann dann, wie aus Figur 17 ersichtlich, das Materialbündel 34 auf die Ebene der Förderbahn 39 abgesenkt und durch Betätigung der Querfördermittel 30 des unteren Aufnahmeplatzes 28 der Wechselvorrichtung 23 auf die Förderbahn 39 übergeben werden.

Wie aus Figur 17 ersichtlich, ist also nunmehr eine Materialkommission 41 - bestehend aus dem Material 34 - auf die Förderbahn 39 gebracht, es befindet sich auf dem Stellplatz 31 die dritte Kassette 48 zur Entnahme von Lagermaterial und es befindet sich die Hubvorrichtung 15 auf dem Weg, die zweite Kassette 47 zurückzulagern, um eine vierte, das heißt also die nächste Kassette zu holen.

Bevor die Hubvorrichtung 15 mit der genannten vierten Kassette bereit steht, kann die Wechselvorrichtung 23 nach Abgabe der Materialkommission 41 wieder zur Übernahme der nächsten Kassette bereitstehen.

Es kann also neben dem eingangs beschriebenen normalen Kassettenwechsel zur Entnahme von Lagermaterial und zu dessen Kommissionierung zwischendurch ohne weiteres und ohne großen Zeitverlust auch die Ausgabe von Kommissionen auf die Förderbahn 39 erfolgen, um die Ablageeinrichtung 33 für die Zusammenstellung weiterer Kommissionen frei zu machen.

Wie nunmehr insbesondere aus den Figuren 3 und 4 ersichtlich, können mehrere Kommissionen 41 auf die beschriebene Weise auf der Förderbahn 39 gesammelt werden, bevor deren Ausgabe aus dem System erfolgt.

Zur Ausgabe aus dem System dient der bereits beschriebene Ablagetisch 42 mit seinen Fördermitteln 43, der dann die Kommissionen 41 übernehmen kann, ohne daß das Regalförderzeug wegen jeder einzelnen Kommission aus dem Regalbereich herausfahren muß.

Wie ersichtlich, arbeitet die neue Vorrichtung äußerst zeit- und energiesparend, wobei die Bedienungsperson mit Hilfe der Bühne nur noch horizontal verfährt. Die Wechselvorgänge zwischen den nacheinander zu bearbeitenden Lagermaterialien bzw. der diese enthaltenden Kassetten einschließlich der Entsorgung der Materialkommissionen überschneiden sich weitgehend, so daß in erheblichem Maße an Arbeitszeit gespart wird, sich also die Kommissionierung der Materialien wesentlich schneller als in bekannten Fällen durchführen läßt.

## Patentansprüche

1. Vorrichtung zur Zusammenstellung von Materialkommissionen aus in einer Wabenregalanlage (1, 2) eingelagertem Lagergut in Gestalt eines an einer Stirnseite des jeweiligen Regals entlang verfahrbaren Regalförderzeuges (5) mit einer mitfahrenden Bühne (14), die eine Arbeitsplattform sowie einen Stellplatz zur Handhabung des Lagergutes aufweist, auf den die das Lagergut enthaltenden Kassetten (4) wenigstens mittelbar durch ein Transportmittel (17) überbringbar sind, das die Kassetten (4) ergreift und aus dem Regal herauszieht sowie wieder in das Regal zurückschiebt, wobei neben dem Stellplatz (31) eine Ablageeinrichtung zur Aufnahme ausgewählter Stücke des Lagergutes angeordnet ist,
dadurch gekennzeichnet,
daß die Bühne (14) am Regalförderzeug (5) feststehend angebracht ist, daß das Regalförderzeug (5) zur Aufnahme einer Kassette (4) eine im wesentlichen vertikal verfahrbare Hubvorrichtung (15) mit dem Transportmittel (16) für die Kassetten aufweist, daß zwischen Hubvorrichtung und Stellplatz (31) der Bühne am Regalförderzeug (5) eine Wechselvorrichtung (23) für die Kassetten (4) im wesentlichen vertikal verfahrbar ist, und daß Hubvorrichtung, Wechselvorrichtung (23), Stellplatz (31) der Bühne und Ablageeinrichtung (33) mit Mitteln (18, 29, 30, 32) zum Transport der Kassetten bzw. des Lagergutes (34) quer zur Längsrichtung der Kassetten (4) bzw. quer zur Bewegungsrichtung der Kassetten zwischen Wabenregal (1, 2) und Regalförderzeug (5) ausgestattet sind derart, daß die Kassetten (4) zwischen Hubvorrichtung (15), Wechselvorrichtung (23) und Stellplatz (31) gegenseitig übergeben werden können.

2. Vorrichtung nach Anspruch 1,
dadurch gekennzeichnet,
daß die Wechselvorrichtung (23) mit zwei nahe übereinander angeordneten Aufnahmeplätzen (27, 28) versehen ist, die mit den Mitteln (29, 30) zum Transport der Kassetten bzw. des Lagergutes (34) quer zur Längsrichtung der Kassetten bzw. quer zur Bewegungsrichtung der Kassetten ausgestattet sind.

3. Vorrichtung nach Anspruch 1,
dadurch gekennzeichnet,
daß das Regalförderzeug (5) ein bodenverfahrbarer Rahmen (11) ist, entlang dessen vertikalen, von den Stirnseiten der Wabenregale (1, 2) verfahrbaren Schenkeln (12, 13) die Hubvorrichtung (15) senkrecht bewegbar ist, und daß der gegenseitige Abstand der Schenkel größer als die Länge der Kassetten (4) in Arbeitsrichtung des Transportmittels (16) ist.

4. Vorrichtung nach Anspruch 3,
dadurch gekennzeichnet,
daß die Wechselvorrichtung (23) an den vertikalen Schenkeln (12, 13) des Rahmens (11) senkrecht bewegbar ist.

5. Vorrichtung nach Anspruch 1,
dadurch gekennzeichnet,
daß die Hubvorrichtung (15) Auflagebahnen für die Kassetten (4) bei deren Bewegung aus dem Wabenregal (1, 2) und in dieses zurück aufweist, und daß Quertransportmittel (18) und Auflagebahnen gegenseitig höhenverstellbar sind.

6. Vorrichtung nach Anspruch 3,
dadurch gekennzeichnet,
daß die Hubvorrichtung (15) über die gesamte Höhe des Rahmens (11) verfahrbar ist.

7. Vorrichtung nach Anspruch 1,
dadurch gekennzeichnet,
daß das Transportmittel (16) der Hubvorrichtung (15) für die Kassetten (4) ein in Kassettenlängsrichtung an der Hubvorrichtung über die Kassetten hinweg verfahrbarer Greifer (17) zur Erfassung des dem Regalförderzeug (5) jeweils zugewandten Stirnseitenbereichs der Kassetten ist.

8. Vorrichtung nach Anspruch 1,
dadurch gekennzeichnet,
daß die Ablageeinrichtung (33) zur Aufnahme ausgewählter Stücke des Lagergutes (34) einen muldenförmigen Querschnitt aufweist.

9. Vorrichtung nach Anspruch 8,
dadurch gekennzeichnet,
daß die Ablageeinrichtung (33) einen U-förmigen Querschnitt aufweist.

10. Vorrichtung nach Anspruch 8,
dadurch gekennzeichnet,
daß die Ablageeinrichtung (33) einen V-förmigen Querschnitt aufweist.

11. Vorrichtung nach Anspruch 9 oder 10,
dadurch gekennzeichnet,
daß die Ablageeinrichtung (33) eine auf der dem Stellplatz (31) für die Kassetten (4) abgewandten Seite sich nach oben gegebenenfalls geneigt erstreckende, feststehende Auflage (36) in Verbindung mit einer gegenüberliegenden gegebenenfalls nach schräg oben geneigten Gegenauflage (37) ist.

12. Vorrichtung nach Anspruch 11,
dadurch gekennzeichnet,
daß die Gegenauflage (37) vom in der Ablageeinrichtung aufgenommenen Lagermaterial (34) fort nach unten aus dem Arbeitsbereich der Quertransportmittel (32) des Stellplatzes (31) bringbar ist.

13. Vorrichtung nach Anspruch 11,
dadurch gekennzeichnet,
daß Auflage (36) und Gegenauflage (37) durch Stege gebildet sind.

14. Vorrichtung nach Anspruch 8,
dadurch gekennzeichnet,
daß die Ablageeinrichtung (33) gegenüber der Bühne (44) über Wägezellen bzw. Wägevorrichtungen (50) abgestützt ist.

15. Vorrichtung nach Anspruch 1,
dadurch gekennzeichnet,
daß oberhalb oder unterhalb der Bühne (14) eine horizontale Förderbahn (39) für die Materialkommissionen (41) angeordnet ist, deren Förderrichtung mit der Förderrichtung der Quertransportmittel (18, 29, 30, 32) übereinstimmt, und daß die Förderbahn auf ihrer der Wechselvorrichtung (23) zugewandten Seite bis unmittelbar an die ihr zugewandte Begrenzung der Aufnahmeplätze (27, 28) der Wechselvorrichtung reicht.

16. Vorrichtung nach Anspruch 15,
dadurch gekennzeichnet,
daß außerhalb der Wabenregalanlage ein horizontaler Ablagetisch (42) mit in Richtung der Querfördermittel (18, 29, 30, 32) arbeitenden Fördermitteln (43) angeordnet ist, und daß die Höhenlage des Ablagetisches der der Förderbahn (39) entspricht.

17. Vorrichtung nach Anspruch 1,
dadurch gekennzeichnet,
daß die Querfördermittel (18, 29, 30, 32) Förderketten aufweisen derart, daß in Querförderrichtung aneinander anschließende Förderketten gegeneinander seitlich versetzt und endständig ineinandergreifend angeordnet sind.

## Claims

1. Device for assembling material consignments from stock which is stored in a honeycomb shelf unit (1, 2), which device is in the form of a shelf conveyor implement (5) which can travel along a frontal area of the respective shelf and has a co-travelling stage (14) comprising an operating platform and a set-down location for handling the stock, to which location the magazines (4) containing the stock can be delivered at least indirectly by a transport means (17) which takes up the magazines (4), withdraws them from the shelf and pushes them back into the shelf again, a depository device for receiving selected items of the stock being disposed next to the set-down location (31), characterised in that the stage (14) is mounted in a stationary manner on the shelf conveyor implement (5), that for receiving a magazine (4) the shelf conveyor implement (5) comprises a lifting device (15) which can travel essentially vertically with the transport means (16) for the magazines, that a change-over device (23) for the magazines (4) can travel essentially vertically on the shelf conveyor implement (5) between the lifting device and the set-down location (31) of the stage, and that the lifting device, the change-over device (23), the set-down location (31) of the stage and the depository device (33) are equipped with means (18, 29, 30, 32) for transporting the magazines or stock (34) transversely to the longitudinal direction of the magazines (4) or transversely to the direction of movement of the magazines between the honeycomb shelf (1, 2) and the shelf conveyor implement (5) such that the magazines (4) can be transferred between the lifting device (15), the change-over device (23) and the set-down location (31).

2. Device according to claim 1, characterised in that the change-over device (23) is provided with two receiving locations (27, 28) which are disposed near and above one another and are equipped with the means (29, 30) for transporting the magazines or stock (34) transversely to the longitudinal direction of the magazines or transversely to the direction of movement of the magazines.

3. Device according to claim 1, characterised in that the shelf conveyor implement (5) is a frame (11) which can travel along the ground and along whose vertical legs (12, 13), which can travel in front of the frontal areas of the honeycomb shelves (1, 2), the lifting device (15) can move perpendicularly, and that the spacing of the legs is greater than the length of the magazines (4) in the operating direction of the transport means (16).

4. Device according to claim 3, characterised in that the change-over device (23) can move perpendicularly on the vertical legs (12, 13) of the frame (11).

5. Device according to claim 1, characterised in that the lifting device (15) comprises support tracks for the magazines (4) for their movement out of the honeycomb shelf (1, 2) and back into the latter, and that the transverse transport means (18) and the support tracks are vertically adjustable with respect to one another.

6. Device according to claim 3, characterised in that the lifting device (15) can travel over the entire height of the frame (11).

7. Device according to claim 1, characterised in that the transport means (16) of the lifting device (15) for the magazines (4) is a gripper (17) which can travel over the magazines (4) in the longitudinal direction of the latter on the lifting device (15) in order to engage the frontal region, which in each case faces the shelf conveyor implement (5), of the magazines.

8. Device according to claim 1, characterised in that the depository device (33) has a trough-shaped cross-section for receiving selected items of the stock (34).

9. Device according to claim 8, characterised in that the depository device (33) has a U-shaped cross-section.

10. Device according to claim 8, characterised in that the depository device (33) has a V-shaped cross-section.

11. Device according to claim 9 or 10, characterised in that the depository device (33) is a stationary support (36) which extends upwards, possibly at an inclination, on the side which is distant from the set-down location (31) for the magazines (4), combined with an opposite counter-support (37), which may also extend upwards at an inclination.

12. Device according to claim 11, characterised in that the counter-support (37) can be brought downwards away from the stock (34) in the depository device out of the operating range of the transverse transport means (32) of the set-down location (31).

13. Device according to claim 11, characterised in that the support (36) and the counter-support (37) are formed by bars.

14. Device according to claim 8, characterised in that the depository device (33) is supported with respect to the stage (44) via load cells or weighing devices (50).

15. Device according to claim 1, characterised in that a horizontal conveyor track (39) for the material consignments (41) is disposed above or below the stage (14), the conveying direction of which track corresponds to the conveying direction of the transverse transport means (18, 29, 30, 32), and that the conveyor track extends on its side which faces the change-over device (23) right up to the boundary, which faces it, of the receiving locations (27, 28) of the change-over device.

16. Device according to claim 15, characterised in that a horizontal depository table (42) with conveyor means (43) operating in the direction of the transverse conveyor means (18, 29, 30, 32) is disposed outside of the honeycomb shelf unit, and that the height of the depository table corresponds to that of the conveyor track (39).

17. Device according to claim 1, characterised in that the transverse conveyor means (18, 29, 30, 32) comprise conveyor chains such that conveyor chains which adjoin in the transverse conveying direction are disposed in a laterally staggered manner and so as to interlock at the ends.

## Revendications

1. Dispositif pour préparer des commandes de matériel à partir d'un matériel de stockage stocké dans une installation de rayonnage en nid d'abeilles (1,2), sous la forme d'un transtockeur (5) déplaçable devant une face frontale du rayonnage respectif et comportant un plateau (14) qui se déplace conjointement et possède une plateforme de travail ainsi qu'un emplacement de maintien pour la manipulation du matériel de stockage, auquel les cassettes (4) contenant le matériel de stockage peuvent être transférées au moins indirectement par un moyen de transport (17), qui saisit les cassettes (4), les ressort du rayonnage et les réintroduit dans le rayonnage, un dispositif de réception servant à recevoir des articles sélectionnés du matériel de stockage étant disposé à côté de l'emplacement de maintien (31), caractérisé en ce que le plateau (14) est monté fixe sur le transtockeur (5), que le transtockeur (5) possède, pour la réception d'une cassette (4), un dispositif de levage (15) déplaçable essentiellement verticalement et comportant le moyen de transport (16) pour les cassettes, qu'un dispositif changeur (23) pour les cassettes est déplaçable essentiellement verticalement entre le dispositif de levage et l'emplacement de maintien (31) du plateau sur le transtockeur (5), et que le dispositif de levage, le dispositif changeur (23), l'emplacement de maintien (31) du plateau et le dispositif de réception (33) sont équipés de moyens (18,29,30,32) servant à transporter les cassettes ou le matériau de stockage (34) transversalement par rapport à la direction longitudinale des cassettes (4) ou transversalement par rapport à la direction de déplacement des cassettes entre le rayonnage en nid d'abeilles (1,2) et le transtockeur (5) de sorte que les cassettes (4) peuvent être transférées réciproquement entre le dispositif de levage (15), le dispositif changeur (23) et l'emplacement de maintien (31).

2. Dispositif selon la revendication 1, caractérisé en ce que le dispositif changeur (25) est équipé de deux emplacements de réception (27,28), qui sont superposés à proximité l'un de l'autre et qui sont équipés des moyens (29,30) pour transporter les cassettes ou le matériel de stockage (34) transversalement par rapport à la direction longitudinale des cassettes ou transversalement par rapport à la direction de déplacement des cassettes.

3. Dispositif selon la revendication 1, caractérisé en ce que le transtockeur (5) est un cadre (11) déplaçable au sol, que le dispositif de levage (15) est déplaçable verticalement le long des branches verticales (12,13) de ce cadre, qui sont déplaçables à partir des faces frontales des rayonnages en nid d'abeilles (1,2), et que la distance réciproque des branches est supérieure à la longueur des cassettes (4) dans la direction de travail du moyen de transport (16).

4. Dispositif selon la revendication 3, caractérisé en ce que le dispositif chargeur (23) est déplaçable verticalement sur les branches verticales (12, 13) du cadre (11).

5. Dispositif selon la revendication 1, caractérisé en ce que le dispositif de levage (15) comporte des pistes de support pour les cassettes (4) lors de leur sortie hors du rayonnage en nid d'abeilles (1,2) et lors de leur remise en place dans ce rayonnage et que des moyens de transport transversal (18) et des pistes de support sont réciproquement réglables en hauteur.

6. Dispositif selon la revendication 3, caractérisé en ce que le dispositif de levage (15) est déplaçable sur toute la hauteur du cadre (11).

7. Dispositif selon la revendication 1, caractérisé en ce que le moyen de transport (16) du dispositif de levage (15) pour les cassettes (4) est un organe de préhension (17) qui est déplaçable au-delà des cassettes dans la direction longitudinale de ces dernières, sur le dispositif de levage et sert à saisir la partie de la face latérale des cassettes, qui est tournée respectivement vers le transtockeur (5).

8. Dispositif selon la revendication 1, caractérisé en ce que le dispositif de réception (33) servant à recevoir des articles sélectionnés du matériel de stockage (34) possède une section transversale en forme d'auge.

9. Dispositif selon la revendication 8, caractérisé en ce que le dispositif de réception (33) possède une section transversale en forme de U.

10. Dispositif selon la revendication 8, caractérisé en ce que le dispositif de réception (33) possède une section transversale en forme de V.

11. Dispositif selon la revendication 9 ou 10, caractérisé en ce que le dispositif de réception (33) est un support fixe (36), qui s'étend vers le haut, éventuellement obliquement, sur la face tournée à l'opposé de l'emplacement de maintien (31) pour les cassettes (4), en liaison avec un support antagoniste (37) éventuellement incliné obliquement vers le haut et situé en vis-à-vis.

12. Dispositif selon la revendication 11, caractérisé en ce que le support antagoniste (37) peut être entrainé vers le bas, à partir du matériel de stockage (34) logé dans le dispositif de réception, hors de la zone de travail des moyens de transport transversal (32) de l'emplacement de maintien (31).

13. Dispositif selon la revendication 11, caractérisé en ce que le support (36) et le support antagoniste (37) sont formés par des barrettes.

14. Dispositif selon la revendication 8, caractérisé en ce que le dispositif de réception (33) prend appui sur le plateau (44) par l'intermédiaire de cellules de pesée ou de dispositifs de pesée (50).

15. Dispositif selon la revendication 1, caractérisé en ce qu'au-dessus ou au-dessous du plateau (14) est disposée une bande convoyeuse horizontale (32) pour les commandes de matériel (41), dont le sens d'entraînement coïncide avec le sens d'entraînement des moyens de transport transversal (18,29,30,32), et que la bande convoyeuse s'étend, sur son côté tourné vers le dispositif changeur (23), jusque directement contre la limite, tournée vers la bande convoyeuse, des emplacements de réception (27,28) du dispositif changeur.

16. Dispositif selon la revendication 15, caractérisé en ce qu'une table horizontale de réception (42) comportant des moyens d'entraînement (43) travaillant dans la direction des moyens d'entraînement transversal (18,29, 30,32), est disposée à l'extérieur de l'installation de rayonnage en nid d'abeilles et que la position en hauteur de la table de réception correspond à celle de la bande convoyeuse (39).

17. Dispositif selon la revendication 1, caractérisé en ce que les moyens d'entraînement transversal (18,29,30,32) possèdent des chaînes convoyeuses de telle sorte que des chaînes convoyeuses, qui sont continues dans la direction d'entraînement transversal, sont disposées en étant réciproquement décalées latéralement et de manière à être imbriquées les unes dans les autres au niveau de leurs extrémités.
